# EUROPEAN PATENT APPLICATION

(11) **EP 3 032 670 A1**
(43) Date of publication of application: **15.06.2016**
(21) Application number: 14835340.2
(22) Date of filing: 18.07.2014
(51) Int. Cl.: H02G 11/00, B60R 16/02, H01B 7/06

(54) **CURLED-CORD ROUTING STRUCTURE**

(30) Priority: 07.08.2013 JP 2013163993
(71) Applicant: Sumitomo Wiring Systems, Ltd., Yokkaichi-shi, Mie 510-8503 (JP)
(72) Inventor: IWATA, Makoto, Yokkaichi-shi Mie 510-8503 (JP)
(74) Representative: Müller-Boré & Partner Patentanwälte PartG mbB
(86) International application number: PCT/JP2014/069181
(87) International publication number: WO 2015/019831

(57) **Abstract**

It is aimed to provide a novel curl cord routing structure capable of alleviating a stress concentration on fixing parts of a curl cord routed between a supporting body and a movable body by a simple structure. In a routing structure for a curl cord 14 for power supply routed between a supporting body 10 and a movable body 12 displaceably mounted relative to the supporting body 10, the curl cord 14 includes a spiral portion 40 spirally wound and free to expand and contract and is fixed to cord fixing portions 46, 48 respectively provided on the side of the supporting body 10 and the side of the movable body 12 on opposite sides of the spiral portion 40, and pressure-bonding/holding portions 54 to be pressure-bonded and held in a state where the spiral portion 40 is extended are provided on sides closer to the spiral portion 40 than the respective cord fixing portions 46, 48.

## Description

### Technical Field

The present invention relates to a routing structure for a curl cord for power supply routed between a supporting body and a movable body displaceably mounted relative to the supporting body.

### Background Art

Conventionally, an automotive vehicle includes many movable bodies such as a back door and a rear window displaceably mounted relative to a supporting body such as a vehicle body and free to open and close. In the case of mounting an electrical device such as a hot wire in the movable body, power is supplied to the electrical device by routing a wire for power supply between the supporting body and the movable body.

Such a wire routed between the supporting body and the movable body needs to be routed, taking into account a movable range of the movable body, and how to handle the slack of the wire in a closed state where a moving distance of the movable body relative to the supporting body is shortest is problematic. Accordingly, it is proposed in Japanese Unexamined Patent Publication No. 2000-232717 (patent literature 1) to route a curl cord expandable and contractible by being spirally wound as a wire for power supply between a supporting body and a movable body. By doing so, the curl cord as a power supply wire expands and contracts, following a displacement of the movable body, wherefore the problem of the slack in the closed state can be solved by an expansion/contraction function of the curl cord.

However, since the curl cord is processed into a spirally wound state, it expands and contracts while being torsionally deformed when expanding and contracting according to a displacement of the movable body relative to the supporting body. Thus, a load in a twisting direction is applied to parts of the curl cord fixed to the supporting body and the movable body in a concentrated manner every time an expansion/contraction displacement is made. Thus, there has been a possibility of problems such as a stress concentration on the fixing parts of the curl cord and cord breakage.

### Citation List

### Patent Literature

Patent literature 1: Japanese Unexamined Patent Publication No. 2000-232717

### Summary of the Invention

### Technical Problem

The present invention was developed against the above situation and aims to provide a novel curl cord routing structure capable of alleviating a stress concentration on fixing parts of a curl cord routed between a supporting body and a movable body by a simple structure.

### Solution to Problem

A first aspect of the present invention is directed to a curl cord routing structure for a curl cord for power supply routed between a supporting body and a movable body displaceably mounted relative to the supporting body, characterized in that the curl cord includes a spiral portion spirally wound and free to expand and contract and is fixed to cord fixing portions respectively provided on the supporting body side and the movable body side on opposite sides of the spiral portion, and pressure-bonding/holding portions to be pressure-bonded and held in a state where the spiral portion is extended are provided on sides closer to the spiral portion than the respective cord fixing portion.

According to this aspect, the pressure-bonding/holding portions are provided on the sides closer to the spiral portion of the curl cord than the cord fixing portions to which fixing parts of the curl cord to the supporting body and the movable body are fixed. At these pressure-bonding/holding portions, the spiral portion of the curl cord is mounted in an extended state and pressure-bonded and held by a resilient restoring force of such a spiral portion. This causes a displacement load in a twisting direction generated when the spiral portion of the curl cord expands/contracts according to a displacement of the movable body relative to the supporting body to be transferred to the pressure-bonding/holding portion and absorbed and alleviated before reaching the fixing parts of the curl cord to the cord fixing portions. That is, the pressure-bonding/holding portions are merely pressure-bonded and held by the resilient restoring forces of their own and not fixed at specific positions. Thus, when a torsional displacement is transmitted, the pressure-bonding/holding portions can absorb and alleviate the torsional displacement well by the resiliency of their own. As a result, a stress concentration on the fixing parts of the curl cord fixed to the cord fixing portions to the supporting body and the movable body can be alleviated and the durability and connection reliability of the curl cord can be easily and reliably realized.

Note that the pressure-bonding/holding portions have only to be provided closer to the spiral portion than the cord fixing portions, but are preferably provided immediately close to the cord fixing portions. In this way, a routing distance of the spiral portion of the curl cord free to expand and contract and provided between the pressure-bonding/holding portions can be advantageously ensured. Further, it is sufficient to provide one pressure-bonding/holding portion closer to the spiral portion than the cord fixing portion, but the transmission of a torsional load to the fixing parts may be further prevented by providing a plurality of pressure-bonding/holding portions.

According to a second aspect of the present invention, in the curl cord routing structure according to the first aspect, the movable body is slidingly displaceably mounted relative to the supporting body, whereas a guide shaft extending in a sliding direction of the movable body is fixedly provided on the supporting body and the spiral portion of the curl cord is routed in a state externally fitted on the guide shaft.

According to this aspect, when the movable body is vertically slidingly displaced relative to the supporting body, the expansion/contraction of the curl cord can be guided in parallel to the sliding direction since the spiral portion of the curl cord is externally fitted on the guide shaft extending in the sliding direction. In this way, the deformation of the curl cord in an inclining direction can be prevented and the separation of the pressure-bonding/holding portions from mounting areas can be prevented when the movable body is slidingly displaced.

According to a third aspect of the present invention, in the curl cord routing structure according to the second aspect, at the pressure-bonding/holding portions, opposite end parts of the extended spiral portion overlap at least a part of a circumference of the spiral portion when viewed in an axial direction of the guide shaft and the extended spiral portion is arranged to extend toward both sides in a direction perpendicular to the axial direction of the guide shaft.

According to this aspect, since the opposite end parts of the extended spiral portion at the pressure-bonding/holding portions overlap at least the part of the circumference of the spiral portion when viewed in the axial direction of the guide shaft, it can be reliably prevented that a center axis of the spiral portion except at the pressure-bonding/holding portions is displaced from the axial direction of the guide shaft 32 when the spiral portion is extended. This can avoid the application of a displacement force in a direction different from an expanding/contracting direction of the curl cord to the pressure-bonding/holding portions and stably maintain the pressure-bonding/holding portions in a pressure-bonded and held state.

In addition, since the extended spiral portion is arranged to extend toward the both sides in the direction perpendicular to the axial direction of the guide shaft, the spiral portion can be extended in accordance with a spiral direction to prevent the occurrence of a local stress concentration or the like on the extended spiral portion and realize an improvement of the durability of the curl cord.

According to a fourth aspect of the present invention, in the curl cord routing structure according to the second or third aspect, the routing structure further includes a guide shaft holding bracket configured to fixedly hold an end part of the guide shaft on the supporting body and a cord holding bracket coupled to the movable body and configured to be displaced toward and away from the guide shaft holding bracket in the axial direction of the guide shaft according to a sliding displacement of the movable body, and the respective cord fixing portions are provided on outer surface sides in facing directions of the guide shaft holding bracket and the cord holding bracket along the axial direction of the guide shaft, whereas areas extending from the outer surface sides to inner surface sides in the facing directions serve as the pressure-bonding/holding portions.

According to this aspect, there are provided the guide shaft holding bracket, the cord holding bracket displaceable toward and away from the guide shaft holding bracket and the cord fixing portions on the outer surfaces of the guide shaft holding bracket and the cord holding bracket in the facing directions along the axial direction of the guide shaft. Since this enables the cord fixing portions to be provided at an outermost side of an expansion/contraction area of the curl cord, the expansion/contraction area of the curl cord can be advantageously ensured.

Further, by extending and spanning the curl cord from the outer surface sides to the inner surface sides of the guide shaft holding bracket and the cord holding bracket respectively provided with the cord fixing portions, areas extending from the outer surface sides to the inner surface sides can serve as the mounting areas of the pressure-bonding/holding portions and the mounting areas of the pressure-bonding/holding portions can be advantageously provided without being accompanied by an increase in the number of components.

According to a fifth aspect of the present invention, in the curl cord routing structure according to the fourth aspect, the cord holding bracket includes a base portion provided on one side in the direction perpendicular to the axial direction of the guide shaft, a C-shaped guide portion integrally held on the base portion and having a substantially C shape concentric with the guide shaft and arranged around the guide shaft when viewed in the axial direction of the guide shaft and a projecting guide portion separated inwardly from the C-shaped guide portion in the axial direction of the guide shaft and projecting from the base portion toward the guide shaft, and the cord fixing portion is provided on a base end side of the C-shaped guide portion, whereas the spiral portion extending from the cord fixing portion is arranged along the C-shaped guide portion and the pressure-bonding/holding portion obtained by extending the spiral portion is pressure-bonded and held between a tip side of the C-shaped guide portion and the projecting guide portion.

According to this aspect, the cord holding bracket is provided with the C-shaped guide portion having a substantially C shape concentric with the guide shaft and arranged around the guide shaft and the projecting guide portion separated inwardly from the C-shaped guide portion in the axial direction of the guide shaft and projecting from the base portion toward the guide shaft. Thus, by providing the cord fixing portion on the base end side of the C-shaped guide portion, the curl cord extending from the cord fixing portion can be routed and held along the C-shaped guide portion. Thus, the fixing part to be fixed to the cord fixing portion can be reinforced.

Further, the pressure-bonding/holding portion obtained by extending the spiral portion is pressure-bonded and held between the tip side of the C-shaped guide portion and the projecting guide portion. Although the spiral portion is located at a more inner peripheral side than an outer peripheral area of the spiral portion before being extended by being extended, the tip side of the C-shaped guide portion and the projecting guide portion are cut away from each other and the pressure-bonding/holding portion capable of both realizing the extension of the spiral portion in accordance with the spiral direction of the spiral portion and preventing the interference of the extended spiral portion and the C-shaped guide portion can be advantageously configured.

### Effects of the Invention

According to the present invention, the pressure-bonding/holding portions are provided on the sides closer to the spiral portion of the curl cord than the cord fixing portions and, at these pressure-bonding/holding portions, the spiral portion of the curl cord is mounted in the extended state and pressure-bonded and held by the resilient restoring force thereof. This causes a displacement load in a twisting direction generated when the spiral portion of the curl cord expands/contracts to be transferred to the pressure-bonding/holding portions and absorbed and alleviated before reaching the fixing parts of the curl cord to the cord fixing portions. As a result, a stress concentration on the fixing parts of the curl cord fixed to the cord fixing portions of the supporting body and the movable body can be alleviated and the durability and connection reliability of the curl cord can be easily and reliably realized.

### Brief Description of the Drawings

FIG. 1 is a rear view showing a rear window to which a curl cord routing structure as one embodiment of the present invention is applied (solid line: when the rear window is closed, chain double-dashed line: when the rear window is open),
FIG. 2 is a view of an essential part including the curl cord routing structure shown in FIG. 1 when viewed in a direction of an arrow A (when the rear window is closed),
FIG. 3 is a view of the essential part including the curl cord routing structure shown in FIG. 1 when viewed in the direction of the arrow A (when the rear window is open),
FIG. 4 is an enlarged view of the essential part including the curl cord routing structure shown in FIG. 2, and
FIG. 5 is a perspective view of a cord holding bracket of the curl cord routing structure shown in FIG. 3.

### Embodiment of the Invention

Hereinafter, an embodiment of the present invention is described with reference to the drawings.

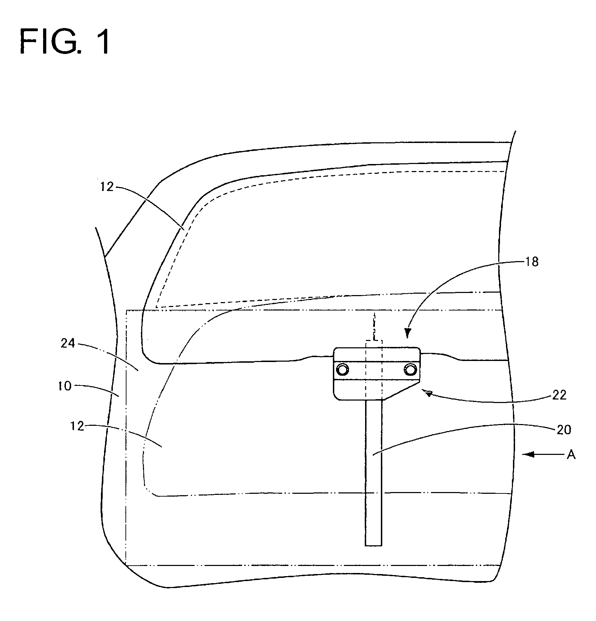

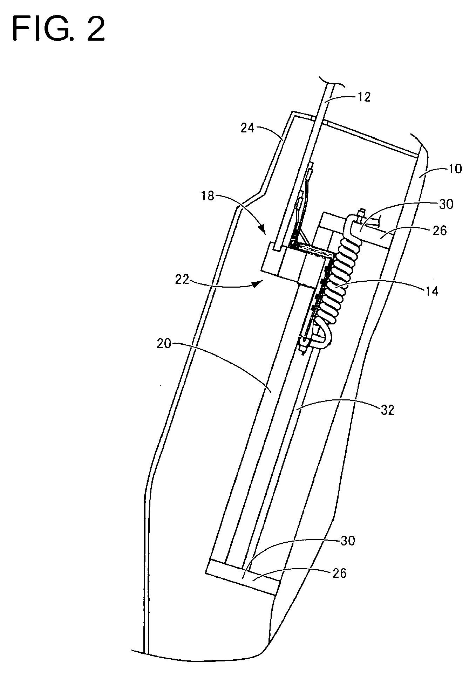

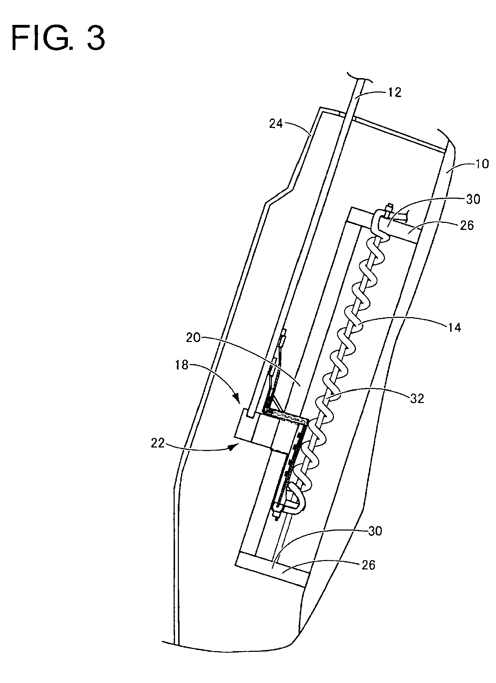

FIGS. 1 to 5 show a structure of routing a curl cord 14 for power supply between a vehicle 10 as a supporting body and a rear window 12 as a movable body displaceably mounted relative to the vehicle 10 using a curl cord routing structure as one embodiment of the present invention. More specifically, as shown in FIG. 1, a sliding mechanism 18 entirely slidingly displaceable in a vertical direction of the vehicle 10 is mounted in the rear window 12. As shown in FIGS. 2 and 3, the sliding mechanism 18 includes a guide rail 20 extending in a sliding direction (vertical direction in FIGS. 2 and 3) of the rear window 12 and fixed to the vehicle 10, a slide bracket 22 slidably mounted on the guide rail 20 and the curl cord 14 arranged along the guide rail 20. Since the spirally wound curl cord 14 is free to expand and contract during a sliding movement from a state shown in FIG. 2 to a state shown in FIG. 3, a sliding displacement is possible. Note that an unillustrated hot wire for defogging is provided in the rear window 12 and power can be supplied to the hot wire by the curl cord 14 routed between the vehicle 10 and the rear window 12. Further, the rear window 12 is accommodated into a window accommodating portion 24 when the rear window 12 is open.

As shown in FIGS. 2 and 3, leg portions 26 are mounted on opposite longitudinal end parts of the guide rail 20. The leg portions 26 are substantially in the form of columns, end parts of the leg portions 26 on one side (left side in FIG. 2) are mounted on the opposite longitudinal end parts of the guide rail 20, whereas end parts of the leg portions 26 on the other side (right side in FIG. 2) are fixed to the vehicle 10 by arbitrary fixing means. Further, substantially central parts of the leg portions 26 serve as guide shaft holding brackets 30, and end parts of a guide shaft 32 extending in the sliding direction of the rear window 12 are fixed at the guide shaft holding brackets 30 of the leg portions 26 arranged on the opposite longitudinal end parts of the guide rail 20. In short, the end parts of the guide shaft 32 are fixedly held on the vehicle 10 via the guide shaft holding brackets 30. Note that the guide rail 20 is made of a known synthetic resin material, metal material or the like and the leg portions 26 are made of a known synthetic resin material or the like.

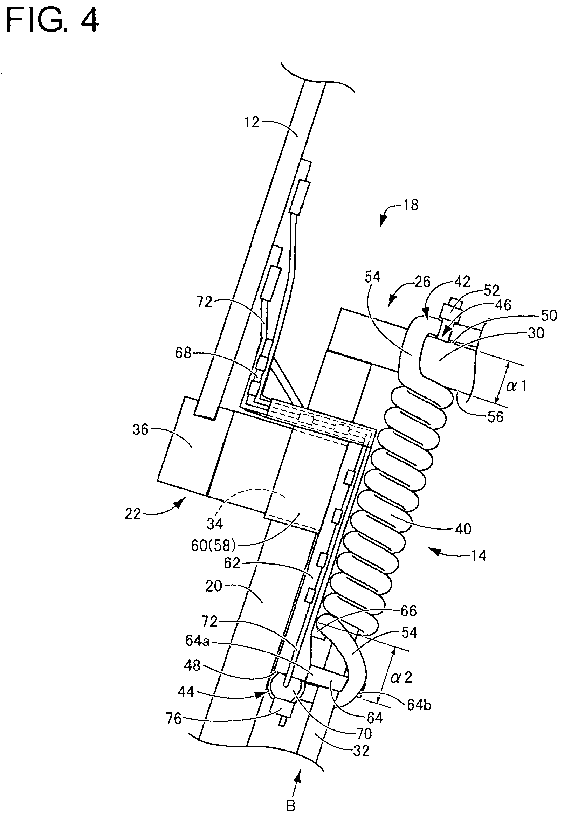

As shown in FIG. 4, the slide bracket 22 includes a sliding portion 34 provided on a base end part and a glass holder 36 provided on a tip part and is made of a known synthetic resin material, metal material or the like. The sliding portion 34 is formed into a substantially inverted U shape and arranged to straddle the guide rail 20, thereby being slidably mounted relative to the guide rail 20. In addition, since a base portion 60 of a cord holding bracket 58 to be described later is fixed to the sliding portion 34 of the slide bracket 22, the sliding portion 34 is substantially in contact with not only an upper part and side surfaces of the guide rail 20, but also a lower part of the guide rail 20. Thus, the slide bracket 22 can be stably slidably mounted relative to the guide rail 20. On the other hand, the glass holder 36 is formed into a substantially U shape and a lower end part of the rear window 12 is fitted and held in a U-shaped part. As the slide bracket 22 is slidingly displaced in an extending direction of the guide rail 20 by an unillustrated driving mechanism, the rear window 12 is slidingly displaceable in the vertical direction relative to the guide rail 20, i.e. the vehicle 10.

Here, the curl cord 14 includes a spiral portion 40 formed by being spirally wound and free to expand and contract, and the spiral portion 40 is routed in a state externally fitted on the guide shaft 32. Further, fixing parts 42, 44 on opposite longitudinal sides of the spiral portion 40 of the curl cord 14 are fixed on cord fixing portions 46, 48 respectively provided on the side of the vehicle 10 as a supporting body side and on the side of the rear window 12 as a movable body side. Specifically, on one longitudinal side (upper side in FIG. 4) of the spiral portion 40, the cord fixing portion 46 is provided on an outer surface 50 of the guide shaft holding bracket 30 facing a surface where the guide shaft 32 is embedded. That is, the cord fixing portion 46 is provided on the side of the vehicle 10 (right side in FIG. 4) via the guide shaft holding bracket 30. In addition, the outer surface 50 is provided with an unillustrated binding band insertion hole, and the fixing part 42 of the curl cord 14 can be stably fixed by being bound and fixed to the outer surface 50 of the guide shaft holding bracket 30 by a binding band 52. On the other hand, on the other longitudinal side (lower side in FIG. 4) of the spiral portion 40, the cord fixing portion 48 is integrally provided on the cord holding bracket 58 as described later. Specifically, the cord fixing portion 48 is provided on the side of the rear window 12 (left side in FIG. 4) via the cord holding bracket 58.

As shown in FIG. 4, pressure-bonding/holding portions 54, 54 pressure-bonded and held in a state where the spiral portion 40 is extended are respectively provided on sides closer to the spiral portion 40 than the respective cord fixing portions 46, 48. More specifically, on the side of the cord fixing portion 46 (upper side in FIG. 4), the pressure-bonding/holding portion 54 is configured by mounting the spiral portion 40 extended from the outer surface 50 of the guide shaft holding bracket 30 to an inner surface 56 of the guide shaft holding bracket 30 in a state pressure-bonded to a mounting area α1 (see FIG. 4) from the outer surface 50 to the inner surface 56 of the guide shaft holding bracket 30 by a resilient restoring force.

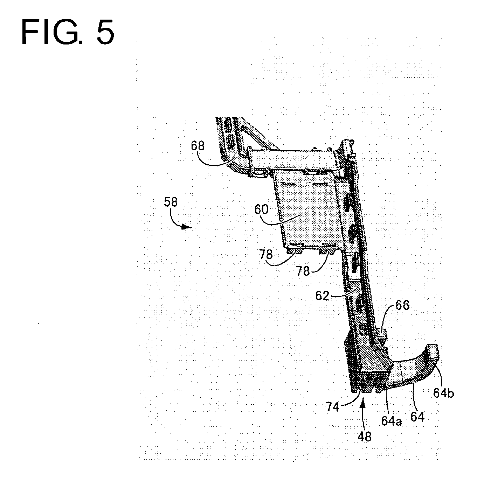

Next, the pressure-bonding/holding portion 54 on the side of the cord fixing portion 48 is described. As shown in FIGS. 4 and 5, the cord holding bracket 58 includes the base portion 60 in the form of a flat plate provided on one side in a direction perpendicular to an axial direction of the guide shaft 32

(left side in FIGS. 4 and 5) and a gutter-like extending portion 62 projecting in the axial direction of the guide shaft 32 (toward the other longitudinal side) from one end edge part of the base portion 60 on the side of the curl cord 14 and open on a front side in the plane of FIG. 4. Further, the cord fixing portion 48 is provided on an extending end part of the extending portion 62. A C-shaped guide portion 64 having a substantially C shape concentric with the guide shaft 32 is provided around the guide shaft 32 to project from the cord fixing portion 48 toward the other side in the direction perpendicular to the axial direction of the guide shaft 32 (right side in FIGS. 4 and 5) when viewed in the axial direction of the guide shaft 32. Specifically, the C-shaped guide portion 64 is integrally held on the base portion 60. A projecting guide potion 66 separated inwardly (upwardly in FIGS. 4 and 5) from the C-shaped guide portion in the axial direction of the guide shaft 32 and projecting from the side of the base portion 60 toward the side of the guide shaft 32 (right side in FIGS. 4 and 5) is provided on the extending end part of the extending portion 62. In addition, a substantially inverted L-shaped gutter-like extending portion 68 extending upward is provided on the other end part of the extending portion 62.

As shown in FIG. 4, the spiral portion 40 of the curl cord 14 extending from the cord fixing portion 48 provided on the side of a base end 64a of the C-shaped guide portion 64 (left side in FIGS. 4 and 5) toward the side of a tip 64b of the C-shaped guide portion 64 (right side in FIGS. 4 and 5) is arranged along the C-shaped guide portion 64 and pressure-bonded and held in a state where the spiral portion 40 is extended between the side of the tip 64b of the C-shaped guide portion 64 (right side in FIGS. 4 and 5) and the projecting guide portion 66. Specifically, the pressure-bonding/holding portion 54 is configured by mounting the spiral portion 40 extended between the side of the tip 64b of the C-shaped guide portion 64 and the projecting guide portion 66 in a pressure-bonded state to a mounting area α2 (see FIG. 4) from the C-shaped guide portion 64 to the projecting guide portion 66 by a resilient restoring force. Here, at the pressure-bonding/holding portion 54, opposite end parts of the extended spiral portion 40 overlap on a circumference of the spiral portion 40 when viewed in the axial direction of the guide shaft 32 (e.g. viewed in a direction of an arrow B). In addition, the extended spiral portion 40 is arranged to extend toward both sides in the direction perpendicular to the axial direction of the guide shaft 32. On the other hand, inner wires 72, exposed by removing an exterior material 70, of the curl cord 14 extending upward (upward in FIG. 4) from the cord fixing portion 48 are arranged along the extending portions 62, 68. Note that, as shown in FIGS. 4 and 5, the curl cord 14 is bound and fixed by winding a binding band 76 inserted through a band insertion hole 74 provided on the cord fixing portion 48.

Further, as shown in FIGS. 4 and 5, the cord holding bracket 58 is fixed to the sliding portion 34 of the side bracket 22 and slidably mounted relative to the guide rail 20 by engaging portions 78 projecting from a side surface of the base portion 60. In short, the cord holding bracket 58 is coupled to the rear window 12 via the side bracket 22 and displaced toward and away from the guide shaft holding brackets 32 in the axial direction of the guide shaft 32 according to a sliding displacement of the rear window 12. In addition, as shown in FIG. 4, the cord fixing portions 46, 48 are respectively provided on outer surface sides of the guide shaft holding bracket 30 and the cord holding bracket 58 in facing directions along the axial direction of the guide shaft 32, whereas the areas α1, α2 extending from the outer surface sides to the inner surface sides in the facing directions serve as the pressure-bonding/holding portions 54, 54.

According to the thus structured curl cord routing structure, the pressure-bonding/holding portions 54, 54 are respectively provided on the sides closer to the spiral portion 40 of the curl cord 14 than the fixing parts 42, 44 of the curl cord 14 to the vehicle 10 and the rear window 12. As a result, at these pressure-bonding/holding portions 54, the spiral portion 40 of the curl cord 14 is mounted in an extended state and the spiral portion 40 is pressure-bonded and held by the resilient restoring force of such a spiral portion 40. This causes a displacement load in a twisting direction generated by the expansion/contraction of the spiral portion 40 of the curl cord 14 to be transferred to the pressure-bonding/holding portions 54, 54 and absorbed and alleviated before reaching the fixing parts 42, 44 of the curl cord 14 on the cord fixing portions 46, 48 when the rear window 12 is slidingly displaced relative to the vehicle 10 from a state shown in FIG. 2 to a state shown in FIG. 3. In short, the pressure-bonding/holding portions 54 are merely pressure-bonded and held by the resilient restoring forces of their own and not fixed at specific positions. Thus, when a torsional displacement is transmitted, the pressure-bonding/holding portions 54 can absorb and alleviate the torsional displacement well by the resiliency of their own. As a result, a stress concentration on the fixing parts 42, 44 of the curl cord 14 fixed to the cord fixing portions 46, 48 to the vehicle 10 and the rear window 12 can be alleviated and the durability and connection reliability of the curl cord 14 can be easily and reliably realized.

Further, since the opposite end parts of the extended spiral portion 40 at the pressure-bonding/holding portions 54 overlap at least the part of the circumference of the spiral portion 40 when viewed in the axial direction of the guide shaft 32 (e.g. viewed in the direction of the arrow B), it can be reliably prevented that a center axis of the spiral portion 40 except at the pressure-bonding/holding portions 54 is displaced from the axial direction of the guide shaft 32 when the spiral portion 40 is extended. In addition, a compact outer appearance (outer shape) can be ensured without forcibly causing the pressure-bonding/holding portions 54 to bulge outwardly. This can avoid the application of a displacement force in a direction different from an expanding/contracting direction of the curl cord 14 to the pressure-bonding/holding portions 54 and stably maintain the pressure-bonding/holding portions 54 in a pressure-bonded and held state. In addition, since the extended spiral portion 40 (pressure-bonding/holding portions 54) is arranged to extend toward the both sides in the direction perpendicular to the axial direction of the guide shaft 32, the spiral portion 40 can be extended in accordance with a spiral direction to prevent the occurrence of a local stress concentration or the like on the extended spiral portion 40 and realize an improvement of the durability of the curl cord 14.

Furthermore, the cord holding bracket 58 is provided with the C-shaped guide portion 64 having a substantially C shape concentric with the guide shaft 32 and arranged around the guide shaft 32 and the projecting guide portion 66 separated inwardly from the C-shaped guide portion 64 in the axial direction of the guide shaft 32 and projecting from the base portion 60 toward the guide shaft 32. Thus, by providing the cord fixing portion 48 on the side of the base end 64a of the C-shaped guide portion 64, the curl cord 14 extending from the cord fixing portion 48 can be routed and held along the C-shaped guide portion 64. Thus, the fixing part 44 to be fixed to the cord fixing portion 48 can be reinforced.

In addition, by extending and spanning the curl cord 14 from the outer surface sides to the inner surface sides of the guide shaft holding bracket 30 and the cord holding bracket 58 respectively provided with the cord fixing portions 46, 48, the areas extending from the outer surface sides to the inner surface sides can serve as the mounting areas α1, α2 of the pressure-bonding/holding portions 54, 54. Thus, the mounting areas α1, α2 of the pressure-bonding/holding portions 54, 54 can be advantageously provided without being accompanied by an increase in the number of components and additional provision of individual mounting spaces.

Further, the pressure-bonding/holding portion 54 obtained by extending the spiral portion 40 is pressure-bonded and held between the side of the tip 63b of the C-shaped guide portion 64 and the projecting guide portion 66. Although the spiral portion 40 is located at a more inner peripheral side than an outer peripheral area of the spiral portion 40 before being extended by being extended, the mounting area α2 of the pressure-bonding/holding portion 54 capable of both realizing the extension of the spiral portion 40 in accordance with the spiral direction of the spiral portion 40 and preventing the interference of the extended spiral portion 40 and the C-shaped guide portion 64 can be advantageously configured since the side of the tip 64b of the C-shaped guide portion 64 and the projecting guide portion 66 are cut away from each other.

Further, when the rear window 12 is vertically slidingly displaced relative to the vehicle 10, the expansion/contraction of the curl cord 14 can be guided in parallel to the sliding direction since the spiral portion 40 of the curl cord 14 is externally fitted on the guide shaft 32 extending in the sliding direction. In this way, the deformation of the curl cord 14 in an inclining direction can be prevented and the separation of the pressure-bonding/holding portions 54, 54 from the mounting areas α1, α2 can be prevented when the rear window 12 is slidingly displaced.

Furthermore, there are provided the guide shaft holding bracket 30, the cord holding bracket 58 displaceable toward and away from the guide shaft holding brackets 30 and the cord fixing portions 46, 48 on the outer surfaces of the guide shaft holding brackets 30 and the cord holding bracket 58 in the facing directions along the axial direction of the guide shaft 32. Since this enables the cord fixing portions 46, 48 to be provided at an outermost side of an expansion/contraction area of the curl cord 14, the expansion/contraction area of the curl cord 14 can be advantageously ensured.

Although the embodiment of the present invention has been described in detail above, the present invention is not limited to the specific description of the embodiment. For example, the pressure-bonding/holding portions 54, 54 have only to be provided closer to the spiral portion 40 than the cord fixing portions 46, 48 and the positions thereof are not limited to those shown in the embodiment. Preferably, the pressure-bonding/holding portions 54, 54 are provided immediately close to the cord fixing portions 46, 48. In this way, a routing distance of the spiral portion 40 of the curl cord 14 free to expand and contract and provided between the pressure-bonding/holding portions 54 can be advantageously ensured. Further, it is sufficient to provide one pressure-bonding/holding portion 54 closer to the spiral portion 40 than the cord fixing portion 46, 48, but the transmission of a torsional load to the fixing parts 42, 44 may be further prevented by providing a plurality of pressure-bonding/holding portions.

Further, a dimension of the pressure-bonding/holding portion 54 is not particularly limited and can be arbitrarily set. For example, the pressure-bonding/holding portion 54 may have a dimension substantially corresponding to one turn of the spiral portion 40 of the curl cord 14. By doing so, a clear basis for forming the pressure-bonding/holding portion 54 by extending substantially one turn of the spiral portion 40 of the curl cord 14 can be defined. Thus, an operator can easily grasp the dimension of the pressure-bonding/holding portion 54 and can easily mount the curl cord 14.

### LIST OF REFERENCE SIGNS

10: vehicle (supporting body), 12: rear window (movable body), 14: curl cord, 30: guide shaft holding bracket, 32: guide shaft, 40: spiral portion, 46, 48: cord fixing portion, 54: pressure-bonding/holding portion, 58: cord holding bracket, 60: base portion, 64: C-shaped guide portion, 64a: base end, 64b: tip, 66: projecting guide portion

## Claims

1. A curl cord routing structure for a curl cord for power supply routed between a supporting body and a movable body displaceably mounted relative to the supporting body, **characterized in that**:
the curl cord includes a spiral portion spirally wound and free to expand and contract and is fixed to cord fixing portions respectively provided on the supporting body side and the movable body side on opposite sides of the spiral portion; and
pressure-bonding/holding portions to be pressure-bonded and held in a state where the spiral portion is extended are provided on sides closer to the spiral portion than the respective cord fixing portions.

2. A curl cord routing structure according to claim 1, wherein the movable body is slidingly displaceably mounted relative to the supporting body, whereas a guide shaft extending in a sliding direction of the movable body is fixedly provided on the supporting body and the spiral portion of the curl cord is routed in a state externally fitted on the guide shaft.

3. A curl cord routing structure according to claim 2, wherein, at the pressure-bonding/holding portions, opposite end parts of the extended spiral portion overlap at least a part of a circumference of the spiral portion when viewed in an axial direction of the guide shaft and the extended spiral portion is arranged to extend toward both sides in a direction perpendicular to the axial direction of the guide shaft.

4. A curl cord routing structure according to claim 2 or 3, further comprising:
a guide shaft holding bracket configured to fixedly hold an end part of the guide shaft on the supporting body; and
a cord holding bracket coupled to the movable body and configured to be displaced toward and away from the guide shaft holding bracket in the axial direction of the guide shaft according to a sliding displacement of the movable body,
wherein the respective cord fixing portions are provided on outer surface sides in facing directions of the guide shaft holding bracket and the cord holding bracket along the axial direction of the guide shaft, whereas areas extending from the outer surface sides to inner surface sides in the facing directions serve as the pressure-bonding/holding portions.

5. A curl cord routing structure according to claim 4, wherein:
the cord holding bracket includes a base portion provided on one side in the direction perpendicular to the axial direction of the guide shaft, a C-shaped guide portion integrally held on the base portion and having a substantially C shape concentric with the guide shaft and arranged around the guide shaft when viewed in the axial direction of the guide shaft and a projecting guide portion separated inwardly from the C-shaped guide portion in the axial direction of the guide shaft and projecting from the base portion toward the guide shaft;
the cord fixing portion is provided on a base end side of the C-shaped guide portion, whereas the spiral portion extending from the cord fixing portion is arranged along the C-shaped guide portion and the pressure-bonding/holding portion obtained by extending the spiral portion is pressure-bonded and held between a tip side of the C-shaped guide portion and the projecting guide portion.
